# EUROPEAN PATENT SPECIFICATION

(11) **EP 2 839 453 B1**
(45) Date of publication and mention of the grant of the patent: **31.08.2016**
(21) Application number: 13778424.5
(22) Date of filing: 17.04.2013
(51) Int. Cl.: G09F 3/03, B65D 55/06

(54) **LOCK BOLT**
RIEGEL
PÊNE DE VERROUILLAGE

(30) Priority: 19.04.2012 US 201261635565 P
(43) Date of publication of application: 25.02.2015
(73) Proprietor: Nazzari, Ian, Moraga, CA 94556 (US)
(72) Inventor: Nazzari, Ian, Moraga, CA 94556 (US)
(74) Representative: IPLodge bvba
(86) International application number: PCT/US2013/036969
(87) International publication number: WO 2013/158759

(56) References cited:
- WO-A1-86/05164
- WO-A2-02/05613
- WO-A2-02/05613
- GB-A- 2 308 574
- GB-A- 2 326 620
- US-A1- 2005 023 844
- US-B1- 6 481 765
- US-B1- 6 481 765
- US-B1- 7 740 292

## Description

### A. Field

The present invention relates to a security lock bolt useful to seal objects against unauthorized access, such as containers, meters, doors, covers, and the like.

### B. Related Art

Lock bolts are used to secure or seal objects against unauthorized access much in the manner of padlocks and the like, but are specifically intended to reveal tampering with the seal by visual inspection. Thus, lock bolts are typically arranged so that a visual inspection will show that the seal is secure and had not been tampered with in an unauthorized manner from the time it is installed up to the time it is released from the sealed object.

Typical known lock bolts include a lock bolt body and a locking cylinder irreversibly connected together by a locking feature that enables quick and simple assembly of the bolt body to the locking cylinder but prevents later separation of the two elements without breaking all or part of the lock bolt assembly, which breakage will be readily apparent by visual inspection.

Prior art lock bolts are exemplified in the following listed patent documents:
- WO: 02/05613 - Kaegi
- U.S.: 409,034 - Gillespie
- U.S.: 1,079,839 - Ciernia
- U.S.: 1,131,085 - Reilly
- U.S.: 4,802,700 - Stevenson et al.
- U.S.: 5,120,097 - Fattori et al.
- U.S.: 6,481,765- Jelavic
- U.S.: 6,550,829 - Dobson
- U.S.: 6,962,376 - Palzkill et al.
- U.S.: 7,740,292 - Fattori
- U.S.: 7,336,170 - Auerbach et al.
- US: 2007/0007776 A1 - Beard et al.
- EP: 0 537 400 A1 - Fortin (April 21, 1993)

The prior art lock bolts, while functioning in a manner that provides a locked seal, lack the ability to provide a clearly visible indication of a fully locked condition of a primary internal lock feature between a lock bolt element and a cooperating locking cylinder element, and lack a secondary locking feature that provides a second lock in addition to the primary internal lock between a lock bolt element and a locking cylinder element, while providing a visible indication of a locked condition of the lock bolt and any evidence of tampering with the lock bolt that has interfered with its locked condition.

### Brief Summary of the Invention

According to the present invention, there is provided a lock bolt as specified in claim 1.

A lock bolt in accordance with this invention is useable for sealing an object such as a container, vehicle body, meter, access door, etc. against unauthorized access includes an elongate bolt body having an irreversible locking feature such as a circumferential locking groove located at a position along its length and that is receivable in an axially extending bore in a cooperating locking cylinder that includes an irreversible locking feature within the bore, such as a split spring locking ring, adapted to cooperate with the irreversible locking feature on the bolt body when the bolt body is fully received within the locking cylinder bore.

The bolt body is configured to be received within the bore in a manner such that the locking features of the bolt body and the locking cylinder will be coupled and locked together in an irreversible manner once assembled together, and any attempt to separate the bolt body from the locking cylinder will require breaking the bolt body, the locking feature and/or the locking cylinder. Thus, the bolt lock is configured to provide a visible indication of surreptitious interference with its locking and sealing function.

The bolt body and locking cylinder will typically be provided with matching serial numbers or indicia indicating the original unique pairing of lock bolt with locking cylinder.

The lock bolt of the present invention is provided with both a first or primary internal locking feature irreversibly locking the bolt body to the locking cylinder within the cylinder when the bolt body is in the secured assembled configuration, as well as a secondary locking feature locking the bolt body to a casing of the locking cylinder in a manner that is visible to an outside viewer through a transparent cap member covering and coupled with the casing.

The transparent cap member provides part of the secondary locking feature in the form of one or more transparent cap member locking features in the preferred form of visible abutments that cooperate with one or more second bolt body locking features in the preferred form of visible locking fingers provided on the lock bolt body. The transparent cap member is securely locked permanently to the casing of the locking cylinder in a preferred embodiment. Accordingly, the bolt body is secured irreversibly to the locking cylinder when they are assembled in a secured configuration with the bolt body received in the bore of the locking cylinder by two locks, namely a first internal locking feature within the bore of the locking cylinder, usually a split spring metal locking ring element that engages a first bolt body locking feature in the preferred or typical form of a circumferential locking groove on the metal shank of the bolt body, and a second bolt body locking feature in the preferred form of visible locking fingers on the bolt body that engage the visible locking abutments within the transparent cap member covering the upper end of the locking cylinder.

The secondary bolt body locking feature in the preferred form of the visible locking fingers engaging the visible locking abutments of the transparent cap member also provides a tell-tale indication of complete locking of the first internal locking feature by indicating whether the bolt body has been fully received within the locking cylinder bore to a sufficient extent to cause the first internal locking feature (i.e., the split ring and locking groove on the bolt metal shank) to become engaged. The second bolt body locking feature in the preferred form of locking fingers and the transparent cap member locking feature in the form of locking abutments are configured and dimensioned such that they will not become engaged unless the bolt metal shank has been fully received within the locking cylinder bore to the extent that the first bolt body locking feature is irreversibly engaged with the cylinder locking feature.

The lock bolt according to the present invention accordingly provides a doubly secure seal with visible indications of a fully locked condition and visible evidence of any tampering of the lock bolt causing or attempting to cause the bolt body to be separated from the locking cylinder.

The casing on the bolt body and the locking cylinder are formed of relatively rigid and hard resin (plastic) material that is over-molded directly onto the lock bolt and the locking cylinder, with a connector section of the over-molded material, if desired, that temporarily connects the lock bolt to the locking cylinder to keep them together during shipping and handling up to installation in view of the marking of the lock bolt and locking cylinder with a common serial number that ensures matching of bolt to cylinder when the lock bolt is in a sealed condition.

### Brief Description of the Drawings

The invention will be described in detail below with reference to the appended drawings in which:
Fig. 1 is a perspective front view of elements of an exemplary lock bolt embodying the invention before assembly in a security locking configuration;
Fig. 2 is a perspective rear view of the elements shown in Fig. 1;
Fig. 3 is perspective front cut away view of the elements of Fig. 1 showing the internal structures of the elements;
Fig. 4 is a perspective front cut away view of the elements of Fig. 1 in process of being assembled into a locking configuration;
Fig. 5 is a partial front cut away view of the internal structure of part of the lock bolt and the locking cylinder elements in locked configuration;
Fig. 6 is an enlarged detail cut away view of the second bolt locking feature fingers and the transparent cap member as shown in Fig. 5, with the lock bolt shank locked in the cylinder bore of the locking cylinder by the split locking ring engaged with the locking groove of the bolt shank; and
Fig. 7 is a perspective front view of the lock bolt in fully locked configuration.

### Detailed Description of Illustrative Embodiment

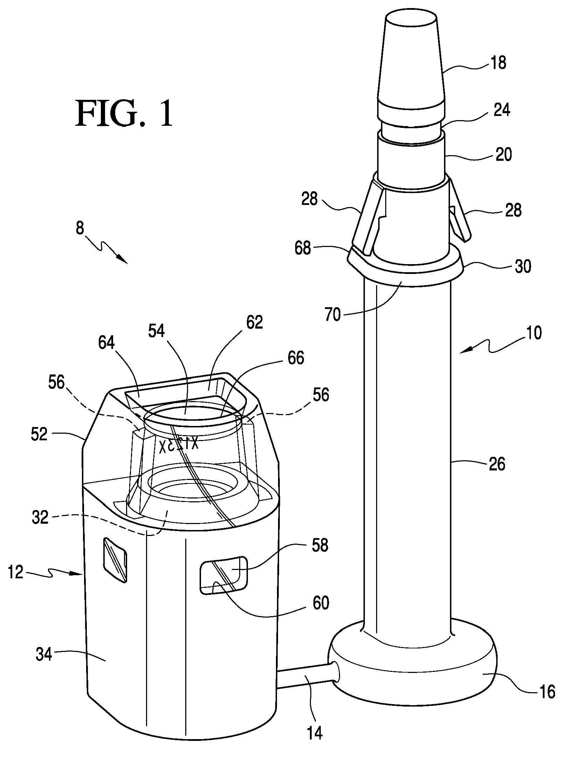

With reference to Figs. 1 - 3, elements of an illustrative example of a lock bolt 8 embodying the invention are seen to include an elongate axially extending bolt body **10** having a desired length and a locking cylinder **12.** The bolt body **10** is intended to cooperate with the locking cylinder **12** to provide a security seal for an object to be locked against intrusion or opening in a manner that will reveal any attempt at such intrusion or opening.

Specifically, the bolt body **10** includes a distal end area that becomes irreversibly locked within the cylinder **12** by a first locking feature (to be described) in the locking cylinder **12** when the bolt body **10** is inserted into the cylinder **12** during a sealing procedure wherein the bolt body **10** is inserted through an opening or structure for receiving the bolt body in an object (e.g., container, vehicle body, meter, access door, etc.) to lock the object against opening or displacement and is locked within the locking cylinder so that the bolt cannot be removed or separated from the locking cylinder without fracturing one or more of the bolt body, the locking cylinder, and the locking element. Thus, the object to be sealed in a secure manner cannot be opened or moved in a manner that will escape detection of overt or surreptitious entry or movement involving damaging or destroying the lock bolt. In accordance with usual practice, when it is desired to release the lock bolt by an authorized party, the bolt body is cut with an appropriate tool (e.g., a bolt cutter) to release the lock bolt from the object and to enable access to the object that was locked or sealed. Accordingly, lock bolts of this kind are usually intended for single use only.

The bolt body **10** is initially formed separate from the locking cylinder **12** as shown in Fig. 1, but is connected as a unit to the locking cylinder **12** by a connector **14** in a manner to be described. The bolt body preferably is made of appropriate steel or other metal that cannot be readily fractured, deformed or broken during normal use in a manner that would interfere with its sealing function. The bolt body further includes an integral enlarged head **16** at its proximal end area for cooperating with an object to be sealed and a tapered distal end **18** that is intended to be locked within the locking cylinder **12.** The bolt body **10** includes an internal metal shank **20** and an internal metal head **22** that is integrally formed in one piece with the shank **18** and defines the enlarged head **16.** The tapered distal end **18** is an extension of the metal shank and includes a circumferential locking groove **24** formed about the circumference of the shank **20,** the purpose and function of which will be described below. The bolt body **10** is formed in a polygonal or squared shape as shown, but this is optional, whereby the cross-section may be in any desired form compatible with the intended use of the lock bolt. The polygonal shape shown possesses the advantage of ease of manipulation and handling of the bolt body **10,** and assists the operator in locating the plane in which the locking fingers (identified at **28** in Fig. 1 and to be described below) are located during assembly of the bolt body **10** to the locking cylinder **12.**

The bolt body **10** includes an over-molded casing **26** that is formed by molding a relatively hard resinous or plastic material over the metal head **22** and partially over the proximal end of the internal metal shank **20,** as shown in Fig. 1. The over-molded casing **26** preferably, although not necessarily, is opaque and includes bendable locking fingers **28** attached in cantilever fashion at one end to the bolt body **10,** which are bendable radially inwardly toward the internal metal shank **20** when pressed inwardly in a manner to be described below. Otherwise, the locking fingers **28** are integral with the over-molded casing **26.**

A closure cover **30** is also formed by the over-molded casing **26** adjacent the locking fingers **28,** and located between the locking fingers and the bolt head **16.** The purpose and function of the closure cover **30** will be evident from the description to follow.

The connector **14** is molded with the over-molded casing **26** and is integral with the casing **26.** The connector **14** is intended to temporarily retain the bolt body with the locking cylinder **12** during shipping and handling until the bolt body and cylinder are separated in preparation for installation on or in an object to be sealed. In practice, the bolt body **10** and locking cylinder **12** will be provided with a matching serial number **38** applied to both elements to ensure against tampering and alteration of the lock bolt in a manner resulting in substituting a different bolt body from one that was originally associated with a locking cylinder to foil detection by visual inspection of the lock bolt assembly during use.

The locking cylinder **12,** as seen in Fig. 1, is initially connected to the bolt body **10** by the temporary connector **14** preferably formed of the material of the over-molded casing **26.**

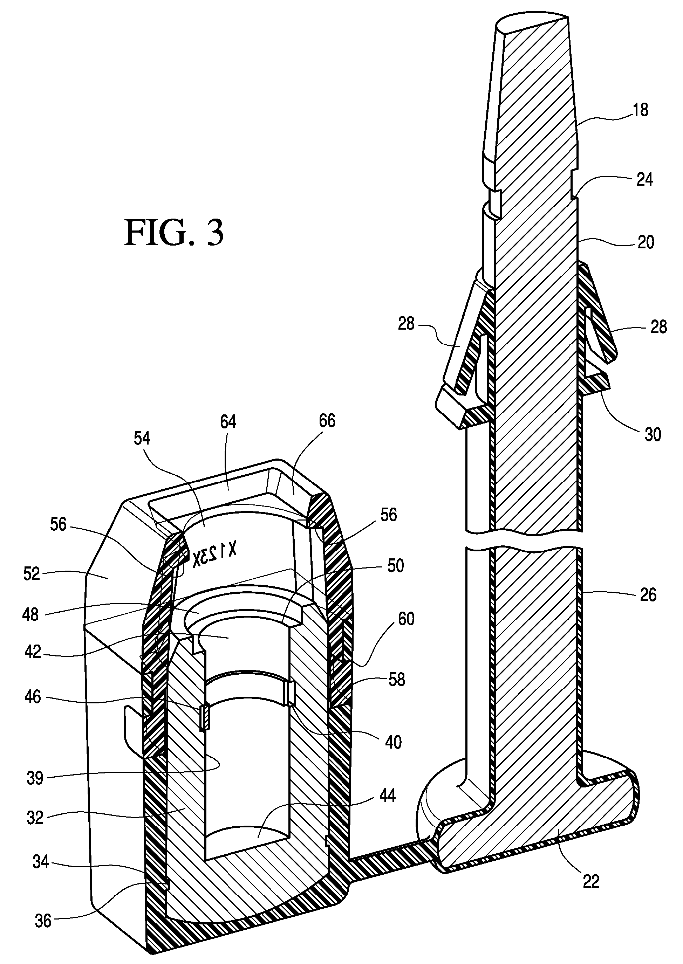

The locking cylinder 12 includes an inner cylinder 32 (see Fig. 3) configured to receive the distal end area of the locking bolt internal metal shank 20, including the tapered distal end portion 18 and the locking groove 24. The inner cylinder 32 is formed of high strength metal similar in a typical embodiment of the lock bolt to the metal used for the internal metal shank and internal metal head of the bolt body 10.

An over-molded casing 34 is provided over the inner cylinder 32, and is secured against separation from the cylinder 32 by molded keys 36 or other features that create a lock against separation between the over-molded casing 34 and inner cylinder 32. The over-molded casing 34 is made of the same material as the over-molded casing 26 of the bolt body, preferably.

Thus, when initially formed, the bolt body **10** and locking cylinder **12** will be a connected assembly wherein the connector **14** temporarily connects the over-molded casing **26** of the bolt body **10** and the over-molded casing **34** of the locking cylinder **12.** This facilitates handling and installation as described above, and ensures that each manufactured bolt body remains with each respective manufactured locking cylinder. As mentioned above, the bolt body and locking cylinder are each inscribed with a unique matching serial number **38** or the like for each bolt body and locking cylinder set. The inscriptions, of course, will be provided on inner inaccessible surfaces of the bolt body and the locking cylinder to prevent tampering with the serial number.

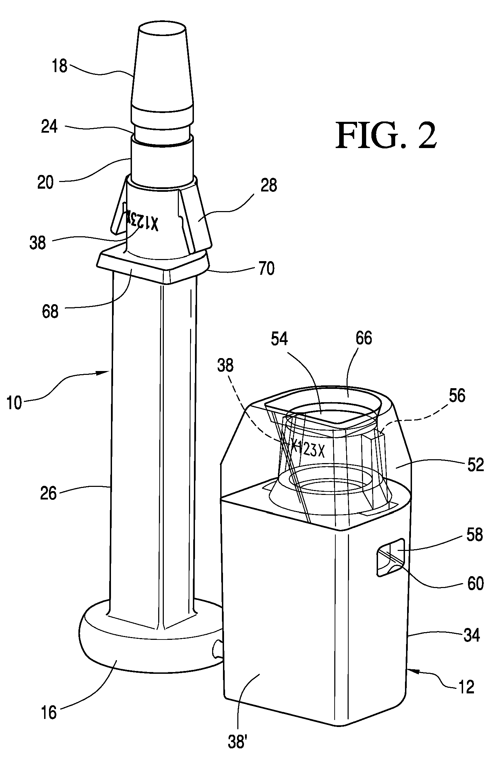

The outer contour of the over-molded casing **34** of the locking cylinder **12** may include a planar rear side **38'** as shown in Fig. 2 and a generally arcuate front side as shown in Fig. 1, although the outer shape of the locking cylinder may be selected on the basis of aesthetics or functionality depending on the desired or intended use of the lock bolt.

The inner cylinder **32,** as seen in Fig. 3, includes an inner cylinder bore **39** that is provided with an undercut circumferential groove **40** between the open end **42** of the inner cylinder bore and a closed bottom end **44** of the inner cylinder bore. A split locking ring **46,** typically a strong spring metal, is provided in the groove **40** (see Fig. 3). The manner in which the locking ring **46** and the locking groove **24** cooperate will be explained in detail below. The inner diameter of the locking ring **46** when it is in its relaxed state is smaller than the inner diameter of the cylinder bore **39,** as illustrated in Fig. 3, for example, and is also smaller in this state than the outer diameter of the internal metal shank **20** of bolt body **10.** The split locking ring **46** is located within an internal circumferential recess within the inner cylinder bore **39** that is dimensioned so that the split ring can expand radially outwardly so that its inner diameter will be about the same as the inner diameter of the cylinder bore **39,** while the split ring **46** is captured within the circumferential recess when the ring 4 is in its normal relaxed state.

Thus, when the lock bolt is to be assembled to the locking cylinder, the tapered distal end **18** of the metal shank **20** of the bolt body **10** may be received within the cylinder bore **39** until the tapered distal end **18** engages the split lock ring **46,** at which point continued insertion of the distal end **18** into the inner cylinder bore **39** urges the split ring into a radially expanded condition to enable the metal shank **20** to continue to be inserted within the bore **39** until the circumferential locking groove **24** reaches a position opposite the split ring **46.** At this point, the split ring **46** will snap by spring action into a contracted configuration towards its relaxed state so that its inner diameter is now smaller than the outer diameter of the metal shank **20** on either side of the locking groove **24,** so that the metal shank **20** is now captured irreversibly within the locking cylinder **12** by the split ring **46.**

The open end **42** of the inner cylinder **32** includes an undercut recess **48** that terminates at radial shoulder or abutment **50.**

The locking cylinder **12** includes a transparent cap member **52** having an axial opening **54** aligned with the inner cylinder bore **39.** The cap member **52** is formed of a transparent rigid resinous (plastic) material having suitable strength characteristics to cooperate with the locking fingers **28** in a manner to be described to provide a second lock function for the lock bolt when it is fully assembled and locked together during use as a security seal.

More specifically, the cap member **52** includes a cap member locking feature in the preferred form of a pair of cap locking abutments **56** diametrically opposed from each other on opposite sides of the axial opening **54** in a preferred embodiment. The cap locking abutments **56** present a pair of generally horizontally extending stop surfaces that will cooperate with distal ends of the bolt body locking fingers **28** when the internal metal shank **20** of bolt body **10** is inserted into the inner cylinder bore **39** of the inner cylinder **32,** as will be explained below. While only two locking fingers **28** and a pair of locking abutments **56** are illustrated in a preferred embodiment, this is exemplary only, and more than two locking fingers and respective cooperating locking abutments could be provided in accordance with the invention herein disclosed.

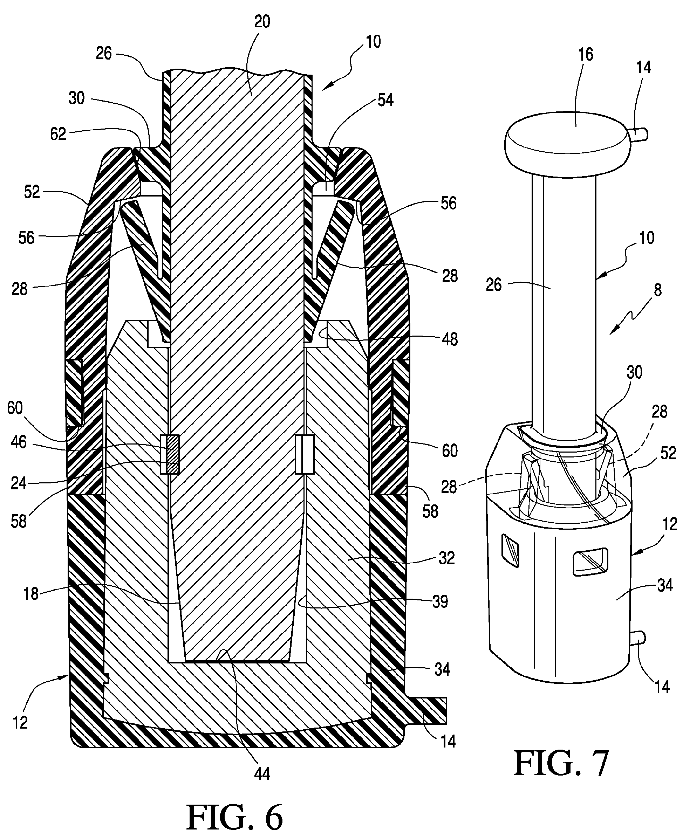

The cap member **52** in the exemplary form illustrated in the drawings is connected to the over-molded casing **34** of the locking cylinder **12** by at least one radial projection **58** (preferably three as shown) that closely fits within at least one cooperating radial opening **60** in the over-molded casing **34,** with each projection **58** and the adjacent body of the cap member **30** disposed between an outer wall of the inner cylinder **32** and the adjacent over-molded casing **34** as best seen in Fig. 3. Preferably, three projections **58** are located within a corresponding plurality of openings **60,** as shown in Figs. 1-3. Thus, once formed, the cap member **52** is tightly held onto the locking cylinder **12** and cannot be separated from the locking cylinder without breaking the cap member **52** or the over-molded casing34 or both, which would reveal tampering with the lock bolt. The cap member **52** may be formed by injection molding the cap member to the over-molded casing **34** of the locking cylinder with the projections58 molded directly into the openings **60,** as shown in Fig. 6.

The openings **60** may be through holes as shown, or internal depressions or sockets (not shown) that can receive the projection or projections **58.** When the through holes are provided as openings **60** they have the advantage of enabling visible inspection of the projections **58** and the presence of the metal inner cylinder **32.**

The transparent cap member **52** is provided preferably with top recess **62** that is intended to receive the closure cover **30** when the internal metal shank **20** is fully inserted into the inner cylinder bore **39.** The closure cover **30** effectively closes the axial opening **54** when the shank **20** is fully inserted into the cylinder bore **39** to thereby prevent tampering with the locking fingers **28** when the shank **20** is inserted fully into the cylinder bore **39** and locked therein in a manner that will be evident in the description to follow. The top recess **62** is preferably formed with shape that will cooperate with a shape of the closure cover **30** so that the cover will only fit one way into the recess. In this manner, the cover and recess serve as an index to ensure that the locking fingers **28** will be aligned with the cap member locking abutments **56** when the metal shank **20** is inserted into the inner cylinder bore **39** of the locking cylinder **12** for sealing an object. In the illustrated example the top recess **62** is provide with a flat upstanding edge **64** and an arcuate upstanding edge **66** that corresponds to similar shaped marginal portions **68, 70,** respectively, of the closure cover **30** (see Fig. 2).

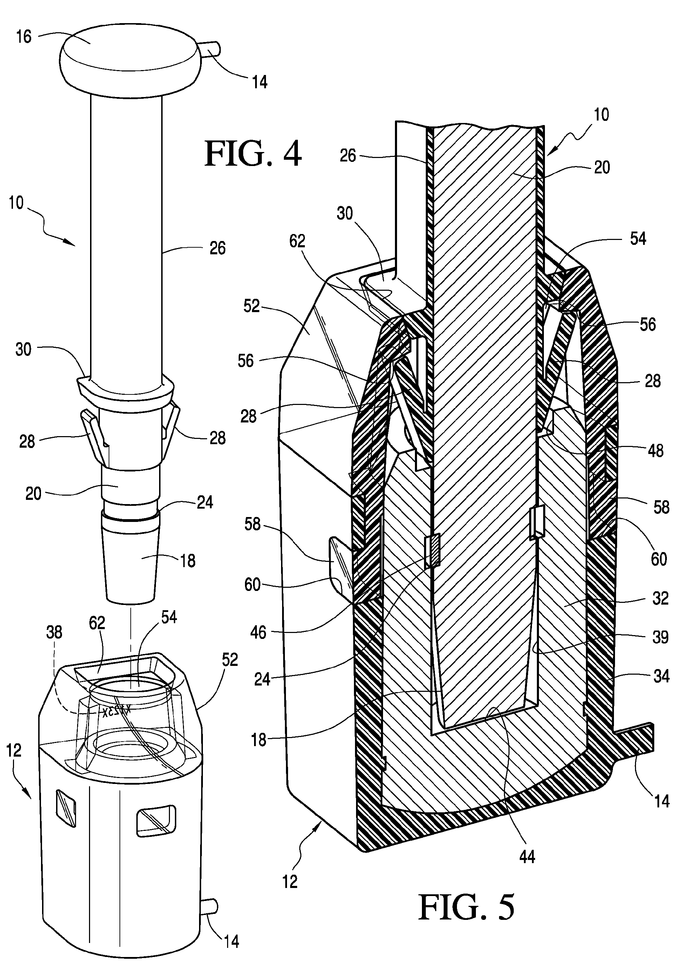

In use, as shown in Figs. 4-6, the bolt body **10** is separated from the locking cylinder **12** at the connector **14** which is simply broken apart by a pulling or twisting motion to free the bolt body from the locking cylinder. Up to this time, the bolt body and locking cylinder have been produced, packaged and shipped as a single unit preferably in order to keep the two parts together given that they share a common serial number **38.**

The bolt body is manipulated to cooperate with an object to be sealed (not shown), typically a hasp or other element associated with the object to be sealed, such as a closure, door, cover, etc. by placement of the bolt body **10** through an opening of the hasp or element of the object to be sealed and then inserting the distal end **18** of the bolt body **10** through the transparent cap member **52** and into the locking cylinder **12** (see Fig. 4) until the circumferential locking groove **24** is opposite the split locking ring **46,** which as described above, has been slightly opened in elastic fashion during passage of the tapered distal end **18** through the locking ring **46.** The split ring **46** will then snap back into a normal smaller diameter form when the locking groove **24** is located opposite the locking ring **46** to engage the locking groove **24** (see Figs. 5 and 6). Thus, the metal shank **20** becomes irreversibly locked against withdrawal from the inner cylinder bore **39** by the locking ring **46** when the locking ring **46** and locking groove **24** are engaged together. When the locking ring **46** and locking groove **24** are engaged together, the position of the lock bolt body **10** relative to the locking cylinder **12** is such that the locking fingers **28** will become lodged beneath the cap abutments **56.** The normal relaxed position of the locking fingers **28,** as illustrated in Fig. 4 is such that the distal ends of the fingers extend wider than or beyond the diameter of the axial opening **54** of the transparent cap member **52,** so that insertion of the over-molded casing **26** and the locking fingers **28** of the bolt body **10** through the axial opening **54** until the locking ring **46** engages the locking groove **24** requires the fingers **28** to be resiliently and elastically bent radially inwardly toward the central axis of the lock bolt body **10** as they pass through the axial opening **54.**

The cap member locking abutments **56** are configured and dimensioned to be positioned so that the distal ends of the locking fingers **28** will snap back radially outwardly relative to the axis of the lock bolt body **10** just when they pass the locking abutments **56** as the bolt body **10** moves into the locking cylinder **12** towards a fully inserted position when the locking ring **46** engages the locking groove **24.** At this position, the locking fingers **28** likewise engage the locking abutments **56** of the cap member **52** in an irreversible manner to provide a secondary locking together of the bolt body **10** and the locking cylinder **12.** Also, the closure cover **30** in this position of bolt body full insertion will fit closely within the top recess **62** of the transparent cap member **52** to effectively seal the axial opening **54** of the cap member. The distal tapered end **18** of the bolt body **10** in the fully inserted position will be located at or closely adjacent the cylinder bottom end **44** and the proximal ends of the locking fingers **28** will be disposed in the undercut recess **48** of the inner cylinder **32** (see Figs. 5 and 6). The internal metal shank **20** and inner cylinder bore **39** are dimensioned so that the terminal end of the metal shank will extend approximately to the bottom of the bore **39** when the metal shank is locked within the cylinder bore **39** by the primary locking feature, namely the split locking ring **46** and the undercut groove **40.** While the metal shank **20** is illustrated as extending up to the bottom of the bore **39,** it will be understood that in practice a clearance may be desired between the shank **20** and the bottom of the bore **39** to ensure that the split ring **46** will be fully engaged with the locking groove **24** of the metal shank **20** despite manufacturing tolerances that could result in slight variations in the dimensions of the shank **20,** bore **39** and the other locking elements of the lock bolt.

With the bolt body **10** fully inserted into the locking cylinder **12,** the secondary locking feature embodied in this example by the locking fingers **28** engaging the cap locking abutments **56** of the transparent cap member will be openly visible for remote inspection and due to the geometry of the spacing between the distal ends of the locking fingers **28** and the locking groove **24,** on the one hand, and the relative position of the locking abutments **56** relative to the locking cylinder **12,** on the other hand, the position of the locking fingers **28** relative to the abutments **56** will provide a visible indication that the locking ring **46** is fully engaged with the locking groove **24.** Moreover, if for any reason (such as malicious tampering with the lock bolt before assembly) the locking ring **46** has been removed from the inner cylinder **32** during assembly, the secondary lock provided by the locking fingers **28** engaged with the locking abutments **56** will ensure that the bolt body **10** is retained in the locking cylinder **12** and a visible inspection of such secondary locking feature will be provided by the transparent cap member **52** which enables remote viewing of the position of the locking fingers **28** relative to the locking abutments **56.**

Any tampering with the lock bolt assembly when fully locked together in an attempt to separate the bolt body **10** from the locking cylinder **12** will be evident due to the transparent cap member **52** which will reveal at least tampering with the locking fingers **28.**

The fully assembled and locked lock bolt 8 is shown in Figure 7.

The description and illustration herein of an exemplary lock bolt embodying the invention is not intended to limit the scope of the invention to the specific structure described and shown, but rather is intended to describe an example of the invention which is encompassed by the claims appended hereto. For example, while a specific type of a first bolt body locking feature in the form of the split locking ring **46** that cooperates with a circumferential locking groove **24** of the bolt body **10** is described, any suitable form of irreversible locking arrangement that meets any applicable specification for such a lock bolt could be used as the first locking feature.

Likewise, while a locking finger arrangement **28** is used as a second locking feature associated with the lock bolt, any suitable irreversible locking arrangement could be used for the second locking feature that would serve the purpose of both indicating engagement of the first locking feature and integrity of the second locking feature to secure the bolt body **10** against separation from the locking cylinder **12** independently of and in addition to the first locking feature.

While the transparent cap member **52** is illustrated and described as a separate member molded onto the locking cylinder over-molded casing **34,** it is contemplated that the cap member could be integrated with the casing **34** as a single piece or otherwise permanently joined to the casing **34** as a separate member. Moreover, while the locking fingers **28** are described as being integrated with the bolt body casing **26,** they could be separately formed and permanently connected to or integrated with the bolt body **10.**

## Claims

1. A lock bolt (8) comprising:
a bolt body (10) extending axially along a length and having a proximal end area and a distal end area, said bolt body (10) comprising a metal;
said bolt body (10) including a first bolt body locking feature (24) located on the bolt body (10) along its length;
a locking cylinder (12) comprising metal having an inner cylinder bore (39) that has an open end (42);
a cylinder locking feature (46) associated with the locking cylinder (12) along a length of the inner metal cylinder bore (39) ;
said inner metal cylinder bore (39) dimensioned to axially receive the bolt body (10) with the first bolt body locking feature (24);
said first bolt body locking feature (24) and said cylinder locking feature (46) arranged to be irreversibly coupled to each other when the bolt body (10) is fully received in the inner cylinder bore (39);
a transparent cap member (52) having an axial opening (54) that is separate from and axially spaced from the inner cylinder bore open end (42) of the locking cylinder (12), said transparent cap member (52) being connected to the locking cylinder (12) in a locked relationship with the axial opening (54) aligned with the inner cylinder bore open end (42);
said transparent cap member (52) comprising at least one visible transparent cap member locking feature (56) located within the axial opening (54) of the transparent cap member (52);
an over-molded resin or plastic bolt body casing permanently attached to said bolt body and covering a portion of the proximal end area of the bolt body, said bolt body casing including a second bolt body locking feature (28) located between the proximal end area of the bolt body (10) and the first bolt body locking feature (24), said second bolt locking feature (28) engaging said visible transparent cap member locking feature (56) in an irreversible manner against separation from the locking cylinder independently of and in addition to the first bolt body locking feature (24) when the first bolt body locking feature (24) is irreversibly coupled to the cylinder locking feature (46);
said bolt body casing arranged to close said axial opening of the transparent member when the first bolt locking feature is irreversibly coupled to the cylinder locking feature.

2. The lock bolt (8) according to claim 1, including a locking cylinder resin or plastic over-molded casing (34) permanently attached to said locking cylinder (12), said transparent member (52) irreversibly connected to and locked to said locking cylinder casing (34).

3. The lock bolt (8) according to claim 2, said bolt body casing (26) including a closure cover (30) between the second bolt locking feature and the proximal end area of the bolt body (10), said closure cover (30) closing said axial opening (54) of the transparent member (52) when the first bolt locking feature (24) is irreversibly coupled to the cylinder locking feature (46).

4. The lock bolt (8) according to any of the preceding claims, said first bolt locking feature comprising an elastically expandable split ring (46) located within the cylinder bore (39) and a circumferential locking groove (24) on the bolt body (10), and said second bolt locking feature comprising radially elastically bendable locking fingers (28) on the bolt body (10), said locking fingers (28) arranged to pass through said axial opening in a one-way manner during movement of the bolt body (10) into the inner cylinder bore (39) and to cooperate with said transparent cap member locking feature (56) upon complete passage of the locking fingers (28) through said axial opening.

5. The lock bolt (8) according to any of the preceding claims, including a locking cylinder resin or plastic over-molded casing (34) permanently attached to said locking cylinder (12); and a connector (14) connecting the bolt body casing and the locking cylinder casing; said connector (14) configured to be easily manually unconnected to thereby provide a temporary connection between the bolt body (10) and the locking cylinder (12) before assembly of the lock bolt (8) in a locked condition with the locking cylinder (12); said bolt body casing (26) and said locking cylinder casing (34) being provided with matching lock bolt identifiers (38).

## Patentansprüche

1. Verriegelungsbolzen (8), der Folgendes umfasst:
einen Bolzenkörper (10), der sich axial entlang einer Länge erstreckt und einen proximalen Endbereich und einen distalen Endbereich aufweist, wobei der Bolzenkörper (10) ein Metall umfasst;
wobei der Bolzenkörper (10) ein erstes Bolzenkörperverriegelungsmerkmal (24) aufweist, das auf dem Bolzenkörper (10) entlang seiner Länge angeordnet ist;
ein Verriegelungszylinder (12), der Metall umfasst und eine innere Zylinderbohrung (39) aufweist, die ein offenes Ende (42) hat;
ein zu dem Verriegelungszylinder (12) gehörendes Zylinderverriegelungsmerkmal (46) entlang einer Länge der inneren metallischen Zylinderbohrung (39);
wobei die innere metallische Zylinderbohrung (39) so bemessen ist, dass sie den Bolzenkörper (10) mit dem ersten Bolzenkörperverriegelungsmerkmal (24) axial aufnimmt;
wobei das erste Bolzenkörperverriegelungsmerkmal (24) und das Zylinderverriegelungsmerkmal (46) so angeordnet sind, dass sie irreversibel aneinander gekoppelt sind, wenn der Bolzenkörper (10) in der inneren Zylinderbohrung (39) vollständig aufgenommen ist;
ein transparentes Abdeckelement (52) mit einer axialen Öffnung (54) die von dem offenen Ende (42) der inneren Zylinderbohrung des Verriegelungszylinders (12) getrennt und axial davon beabstandet ist, wobei das transparente Abdeckelement (52) mit dem Verriegelungszylinder (12) in einem verriegelten Verhältnis verbunden ist, wobei die axiale Öffnung (54) mit dem offenen Ende (42) der inneren Zylinderbohrung ausgerichtet ist;
wobei das transparente Abdeckelement (52) mindestens ein sichtbares transparentes Abdeckelementverriegelungsmerkmal (56) umfasst, das innerhalb der axialen Öffnung (54) des transparenten Abdeckelements (52) angeordnet ist;
ein mit Harz oder Kunststoff überspritztes Bolzenkörpergehäuse, das dauerhaft an dem Bolzenkörper angebracht ist und einen Teil des proximalen Endbereichs des Bolzenkörpers abdeckt, wobei das Bolzenkörpergehäuse ein zweites Bolzenkörperverriegelungsmerkmal (28) enthält, das zwischen dem proximalen Endbereich des Bolzenkörpers (10) und dem ersten Bolzenkörperverriegelungsmerkmal (24) angeordnet ist, wobei das zweite Bolzenkörperverriegelungsmerkmal (28) das sichtbare transparente Abdeckelementverriegelungsmerkmal (56) in irreversibler Weise gegen Trennung von dem Verriegelungszylinder unabhängig vom und zusätzlich zum ersten Bolzenkörperverriegelungsmerkmal (24) in Eingriff nimmt, wenn das erste Bolzenkörperverriegelungsmerkmal (24) irreversibel an das Zylinderverriegelungsmerkmal (46) gekoppelt ist;
wobei das Bolzenkörpergehäuse dazu ausgelegt ist, die axiale Öffnung des transparenten Elements zu schließen, wenn das erste Bolzenverriegelungsmerkmal irreversibel mit dem Zylinderverriegelungsmerkmal gekoppelt ist.

2. Verriegelungsbolzen (8) nach Anspruch 1, der ein mit Harz oder Kunststoff überspritztes Verriegelungszylindergehäuse (34) enthält, das dauerhaft an dem Verriegelungszylinder (12) angebracht ist, wobei das transparente Element (52) irreversibel mit dem Verriegelungszylindergehäuse (34) verbunden und verriegelt ist.

3. Verriegelungsbolzen (8) nach Anspruch 2, wobei das Bolzenkörpergehäuse (26) eine Verschlussabdeckung (30) zwischen dem zweiten Bolzenverriegelungsmerkmal und dem proximalen Endbereich des Bolzenkörpers (10) enthält, wobei die Verschlussabdeckung (30) die axiale Öffnung (54) des transparenten Elements (52) verschließt, wenn das erste Bolzenverriegelungsmerkmal (24) irreversibel mit dem Zylinderverriegelungsmerkmal (46) gekoppelt ist.

4. Verriegelungsbolzen (8) nach einem der vorhergehenden Ansprüche, wobei das erste Bolzenverriegelungsmerkmal einen elastisch dehnbaren Spaltring (46), der innerhalb der Zylinderbohrung (39) angeordnet ist, und eine umlaufende Verriegelungsnut (24) am Bolzenkörper (10) umfasst, und wobei das zweite Bolzenverriegelungsmerkmal radial elastisch biegbare Verriegelungszinken (28) am Bolzenkörper (10) umfasst, wobei die Verriegelungszinken (28) dazu ausgelegt sind, während der Bewegung des Bolzenkörpers (10) in die innere Zylinderbohrung (39) in einer Richtung durch die axiale Öffnung hindurchzutreten und bei vollständigem Durchtreten der Verriegelungszinken (28) durch die axiale Öffnung mit dem transparenten Abdeckelementverriegelungsmerkmal (56) zusammenzuwirken.

5. Verriegelungsbolzen (8) nach einem der vorhergehenden Ansprüche, der ein mit Harz oder Kunststoff überspritztes Verriegelungszylindergehäuse (34), das dauerhaft an dem Verriegelungszylinder (12) angebracht ist; und ein Verbindungsstück (14) enthält, das das Bolzenkörpergehäuse und das Verriegelungszylindergehäuse miteinander verbindet; wobei das Verbindungsstück (14) dazu konfiguriert ist, leicht manuell abgetrennt zu werden, um so eine temporäre Verbindung zwischen dem Bolzenkörper (10) und dem Verriegelungszylinder (12) vor dem Zusammenbau der Verriegelungsbolzens (8) in einem verriegelten Zustand mit dem Verriegelungszylinder (12) vorzusehen; wobei das Bolzenkörpergehäuse (26) und das Verriegelungszylindergehäuse (34) mit passenden Verriegelungsbolzenkennungen (38) versehen sind.

## Revendications

1. Pêne de verrouillage (8) comprenant :
un corps de pêne (10) s'étendant de façon axiale le long d'une longueur et ayant une zone d'extrémité proximale et une zone d'extrémité distale, ledit corps de pêne (10) comprenant un métal ;
ledit corps de pêne (10) incluant une première particularité de verrouillage de corps de pêne (24) située sur le corps de pêne (10) le long de sa longueur ;
un cylindre de verrouillage (12) comprenant du métal ayant un alésage de cylindre intérieur (39) qui a une extrémité ouverte (42) ;
une particularité de verrouillage de cylindre (46) associée au cylindre de verrouillage (12) le long d'une longueur de l'alésage de cylindre intérieur de métal (39) ;
ledit alésage de cylindre de métal intérieur (39) dimensionné pour recevoir de façon axiale le corps de pêne (10) avec la première particularité de verrouillage de corps de pêne (24) ;
ladite première particularité de verrouillage de corps de pêne (24) et ladite particularité de verrouillage de cylindre (46) agencés pour être couplées de manière irréversible l'une à l'autre lorsque le corps de pêne (10) est entièrement reçu dans l'alésage de cylindre intérieur (39) ;
un élément formant capuchon transparent (52) ayant une ouverture axiale (54) qui est séparée et espacée de façon axiale de l'extrémité ouverte d'alésage de cylindre intérieur (42) du cylindre de verrouillage (12), ledit élément formant capuchon transparent (52) étant relié au cylindre de verrouillage (12) dans une relation verrouillée avec l'ouverture axiale (54) alignée sur l'extrémité ouverte d'alésage de cylindre intérieur (42) ;
ledit élément formant capuchon transparent (52) comprenant au moins une particularité de verrouillage d'élément formant capuchon transparent visible (56) située à l'intérieur de l'ouverture axiale (54) de l'élément formant capuchon transparent (52) ;
une enveloppe surmoulée en résine ou en plastique de corps de pêne attachée de manière permanente audit corps de pêne et couvrant une partie de la zone d'extrémité proximale du corps de pêne, ladite enveloppe de corps de pêne incluant une seconde particularité de verrouillage de corps de pêne (28) située entre la zone d'extrémité proximale du corps de pêne (10) et la première particularité de verrouillage de corps de pêne (24), ladite seconde particularité de verrouillage de pêne (28) mettant en prise ladite particularité de verrouillage d'élément formant capuchon transparent visible (56) d'une manière irréversible contre la séparation depuis le cylindre de verrouillage indépendamment et en plus de la première particularité de verrouillage de corps de pêne (24) lorsque la première particularité de verrouillage de corps de pêne (24) est couplée de manière irréversible à la particularité de verrouillage de cylindre (46) ;
ladite enveloppe de corps de pêne agencée pour fermer ladite ouverture axiale de l'élément transparent lorsque la première particularité de verrouillage de pêne est couplée de manière irréversible à la particularité de verrouillage de cylindre.

2. Pêne de verrouillage (8) selon la revendication 1, incluant une enveloppe surmoulée en résine ou en plastique de cylindre de verrouillage (34) attachée de manière permanente audit cylindre de verrouillage (12), ledit élément transparent (52) étant relié de manière irréversible et verrouillé à ladite enveloppe de cylindre de verrouillage (34).

3. Pêne de verrouillage (8) selon la revendication 2, ladite enveloppe de corps de pêne (26) incluant un couvercle de fermeture (30) entre la seconde particularité de verrouillage de pêne et la zone d'extrémité proximale du corps de pêne (10), ledit couvercle de fermeture (30) fermant ladite ouverture axiale (54) de l'élément transparent (52) lorsque la première particularité de verrouillage de pêne (24) est couplée de manière irréversible à la particularité de verrouillage de cylindre (46).

4. Pêne de verrouillage (8) selon l'une quelconque des revendications précédentes, ladite première particularité de verrouillage de pêne comprenant une bague fendue extensible de façon élastique (46) située à l'intérieur de l'alésage de cylindre (39) et une rainure de verrouillage circonférentielle (24) sur le corps de pêne (10), et ladite seconde particularité de verrouillage de pêne comprenant des doigts de verrouillage pliables de façon élastique de manière radiale (28) sur le corps de pêne (10), lesdits doigts de verrouillage (28) étant agencés pour passer à travers ladite ouverture axiale à sens unique pendant le mouvement du corps de pêne (10) dans l'alésage de cylindre intérieur (39) et pour coopérer avec ladite particularité de verrouillage d'élément formant capuchon transparent (56) lors du passage complet des doigts de verrouillage (28) à travers ladite ouverture axiale.

5. Pêne de verrouillage (8) selon l'une quelconque des revendications précédentes, incluant une enveloppe surmoulée en résine ou en plastique de cylindre de verrouillage (34) attachée de manière permanente audit cylindre de verrouillage (12) ; et un connecteur (14) reliant l'enveloppe de corps de pêne et l'enveloppe de cylindre de verrouillage ; ledit connecteur (14) étant configuré pour être aisément manuellement déconnecté pour fournir de ce fait une connexion temporaire entre le corps de pêne (10) et le cylindre de verrouillage (12) avant l'assemblage du pêne de verrouillage (8) dans un état verrouillé avec le cylindre de verrouillage (12) ; ladite enveloppe de corps de pêne (26) et ladite enveloppe de cylindre de verrouillage (34) étant munies d'identificateurs de pêne de verrouillage correspondants (38).
